# EUROPEAN PATENT SPECIFICATION

(11) **EP 0 573 251 B1**
(45) Date of publication and mention of the grant of the patent: **26.08.1998**
(21) Application number: 93304236.8
(22) Date of filing: 01.06.1993
(51) Int. Cl.: F16J 15/20

(54) **Carbon-based composite ceramic sealing material**
AufKohle basierender keramischer Verbundstoff für Dichtungsmaterial
Céramique composite basé sur carbone pour matériau d'étanchéité

(30) Priority: 01.06.1992 JP 166975/92; 01.06.1992 JP 166976/92
(43) Date of publication of application: 08.12.1993
(73) Proprietor: NGK INSULATORS, LTD., Nagoya City Aichi Pref. (JP); TOKYO ELECTRIC POWER SERVICES CO., LTD., Chiyoda-ku, Tokyo (JP)
(72) Inventor: Ikami, Toshiichi, Konan City, Aichi Pref. (JP); Ohta, Kazuo Tokyo Elec. Power Serv. Co.Ltd, Tokyo (JP); Kiyosawa, Shunichi Tokyo Elec.Power Serv. Co.Ltd, Tokyo (JP)
(74) Representative: Paget, Hugh Charles Edward

(56) References cited:
- DE-A- 1 675 368
- DE-A- 3 445 805
- DE-C- 3 429 708
- FR-A- 2 344 765
- GB-A- 2 077 246

## Description

The present invention relates to sealing members used in various valves, various pumps and the like, and a process for the formation of such sealing members. The invention also relates to the use of discrete particles to make a sealing member in situ, to material for use in such sealing members and to a method for the production thereof.

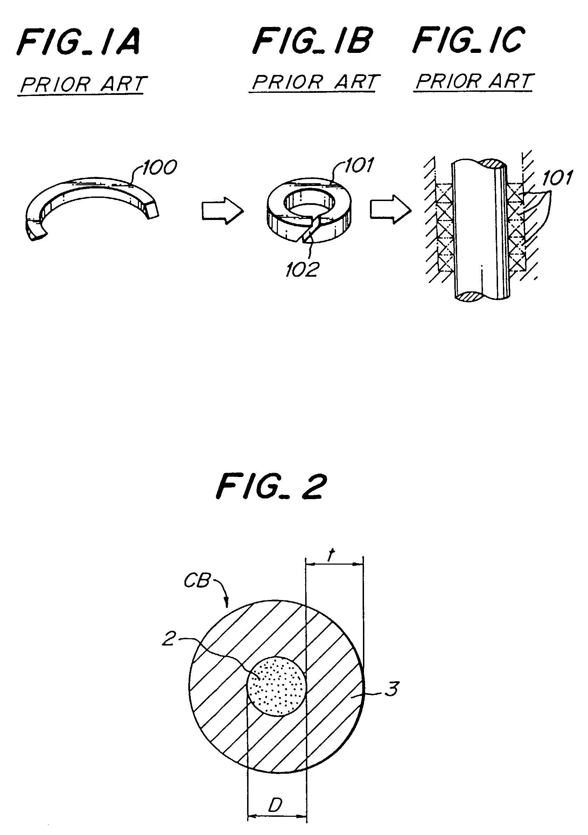

As sealing members for high temperature-high pressure steam valves to be used in thermal power plants, nuclear power plants or the like, coil packings produced by treating asbestos threads with a heat-resistive lubricant and graphite and shaping the thus treated threads in a rectangular section have been conventionally used, as shown in Figs. 1A-1C. Coil packing 101 is formed by curving a sealing member 100 shown in Fig. 1A into a circular shape shown in Fig. 1B. Accordingly, a cut 102 exists at one location. A sealing member is formed by stacking a plurality (for example, five to ten) of coil packings as shown in Fig. 1C such that phases of the cuts 102 are staggered from one another, and pressing the piled coil packings with a pressing member (not shown).

However, such a conventional sealing member has the following problems.
(1) First, asbestos is considered a carcinogenic material, and therefore use of asbestos is undesirable for environmental sanitation reasons.
(2) Since the heat-resistive lubricant is consumed over time, the sealing member needs tightening or frequent replacement.
(3) Since many kinds and sizes of valves are used in thermal power plants, nuclear power plants or the like, many kinds of sealing members (packings) having different diameters need to be prepared. However, it is troublesome to control a great many sizes of sealing members, and incorrect selection of the proper sizes is likely unless great care is paid during fitting of the sealing members.
(4) Since a cut is present in one location of the sealing member, it is necessary to carefully set a plurality of such sealing members so that the cuts do not overlap. Such a setting method is difficult and time-consuming. If the sealing members are improperly set, leakage of steam may result.

On the other hand, when discrete ceramic materials made up of granular or flaky ceramic pellets (e.g., alumina) have been used for given purposes, such ceramic materials exhibit typical ceramic features such as heat resistivity and corrosion resistance. However, since such ceramics have great friction resistance, they can be used for limited purposes only, and their use as a sealing member is prohibitive.

The problem with which the present invention is concerned is the in situ formation of a seal around a longitudinal member, which has heat, corrosion and high friction resistance. DE-A-3445805 discloses the use of a mass of particles that are filled into the space in which the sealing member is to be made and then compressed to a compact body. The document proposes particularly that certain organic materials (rubber, plastics material, PTFE or cork) may be used for these particles. (However, these materials do not perform particularly will in the type of seal under discussion).

One object of the present invention is to provide a high performance sealing member which can easily form a sealed portion in situ, without using asbestos and while overcoming the need to control various sizes of the sealing members.

Further, the present invention can provide the use of composite ceramic materials which have superior physical properties such as friction resistance, while maintaining heat resistance, corrosion resistance and the like possessed by the ceramics.

In a first aspect the present invention provides the use of discrete particles to make a sealing member in situ as set out in claim 1. Pressed natural graphite is preferably used, since it has a high swelling property and high sealing performance. The particles may entirely be composed of graphite. However, it is preferable that an inner, core portion consist of a ceramic (e.g., a ceramic grain) a metal (e.g., iron or lead), a plastic (e.g., FRP), or a composite material thereof and that the outer portion surrounding the core consist of graphite.

The invention further provides a sealing member made in situ, as set out in claim 8, and a method of making a sealing member in situ as set out in claim 13.

Preferably, the above mentioned composite particles are used. The sealing member and the method for the formation of the sealed portion according to the present invention are favorably applied to a space between a stationary member and a movable member, and may be used in, for example, sealing for high temperature-high pressure steam valves, etc. in a thermal power plant.

Since a number of the small particles, at least a surface portion of which is composed of graphite, are pressed in the above sealing member and the above sealed portion-forming method, the small particles adhere to each other to provide a seal, thereby preventing troubles such as leakage of high pressure steam at high temperature.

The composite particles may be of various shapes, for example granular or flaky (planar). Among them, the granular shape is typical.

As the method for producing the above discrete composite particles, any one of following methods (1) through (4) may be used.
(1) A binder is attached to ceramic particles having a granular shape or the like, and a powdery graphite is attached thereto by the binder. These steps are repeated as necessary to provide an adequately thick coating of graphite.
(2) A powdery graphite is press molded to produce an intermediate molding having depressions, and ceramic particles are fitted into the depressions of the intermediate molding. Additional powdery graphite is placed on the intermediate molding to which the ceramic particles are fitted, and the additional graphite is press molded such that the ceramic particles are completely coated by the graphite.
(3) Sheets of graphite are press molded, and ceramic particles are interposed between first and second sheets made of the graphite, while an adhesive is applied between the first and second sheets. In this state, the laminate including the discrete ceramic material therein is press molded to produce a composite sheet-like molding in which the discrete ceramic material is surrounded. A laminated portion of the composite sheet-like molding containing the discrete ceramic material is separated by cutting.
(4) Discrete ceramic material is placed in a container in which a fluidic graphite material is placed, and the graphite material inside the container is attached to a surface of the particles of the discrete ceramic material.

According to the present invention, the ceramic particles function as cores, while surface roughness thereof is improved and friction resistance thereof is reduced by the coating of the graphite material, as compared to the discrete ceramic material without a coating.

According to the discrete composite ceramic material-producing method of the present invention, the discrete ceramic material is coated with the powdery graphite by encapsulating the ceramic particles of the discrete ceramic material with the graphite through the binder [Method (1)], by encapsulating the ceramic particles of the discrete ceramic material in the powdery graphite by press molding [Method (2)], by sandwiching the ceramic particles of the discrete ceramic material between the sheets made of the graphite and separating the sandwiched portion of the resulting laminate by cutting [Method (3)], or by placing the ceramic particles of the discrete ceramic material in the container in which the fluid or semi-fluid graphite material is charged and encapsulating the particles of the discrete ceramic material with the graphite material [Method (4)].

These and other optional features and advantages of the invention will be appreciated upon reading of the following description of the invention when taken in conjunction with the attached drawings, with the understanding that some modifications, variations and changes of the same could be made by the skilled person in the art to which the invention pertains

For a better understanding of the invention, reference is made to the attached drawings, wherein:
Figs. 1A, 1B and 1C are views illustrating a packing as a conventional sealing member and a state in which the packing is used;
Fig. 2 is a sectional view of a composite ceramic pellet in granular form as one embodiment of the present invention;
Figs. 3A, 3B and 3C are flow diagrams for illustrating a first embodiment of the method for producing the discrete composite ceramic material according to the present invention;
Figs. 4A, 4B, 4C, 4D and 4E are flow diagrams for illustrating a second embodiment of the method for producing the discrete composite ceramic material according to the present invention;
Figs. 5A, 5B, 5C and 5D are flow diagrams for illustrating a third embodiment of the method for producing the discrete composite ceramic material according to the present invention;
Fig. 6 is a diagram for illustrating a fourth embodiment of the method for producing the discrete composite ceramic material according to the present invention;
Figs. 7A, 7B and 7C are flow diagrams for illustrating an example of the method for the formation of a sealed portion together with a sealing member of the invention; and
Fig. 8 is a sectional view illustrating a case where a sealed portion according to the present invention is applied to a seal for a pump.

Discrete composite ceramic material is a preferred example of the present invention. A pellet of the discrete composite ceramic material is shown in Fig. 2. The pellet CB includes a substantially spherical ceramic grain surrounded with graphite layer 3 in a spherical-cell shape. The ceramic grain may be composed mainly or essentially of porcelain, alumina (aluminum oxide), silicon nitride, zirconia, or the like. The diameter of the composite pellet is preferably less than 15 mm, more preferably 1 to 12 mm, and most preferably about 1 to about 5 mm. The compression strength of the ceramic grain is preferably not less than 500 kg/cm² and more preferably not less than 1,000 kg/cm². The ceramic grains are sintered bodies and preferably have a diameter not less than 0.5 mm.

The graphite layer 3 is preferably composed of natural graphite or artificial graphite, and the thickness of the graphite layer 3 may be appropriately set depending upon use. For example, when the discrete ceramic material is to be used for a sealing member, the thickness t of the graphite layer is preferably substantially equal to or greater than one-half the diameter D of the ceramic grain 2.

Next, methods for producing such discrete ceramic materials according to the present invention will be explained as follows:

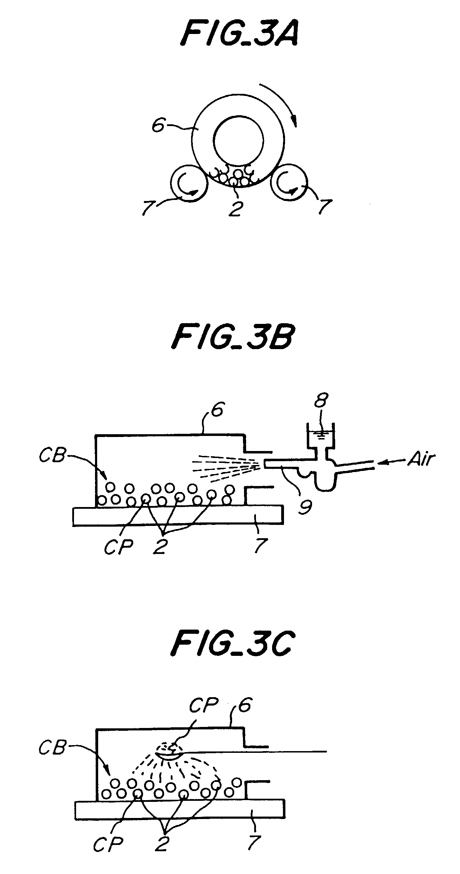

Figs. 3A through 3C depict a production method using a granulating process with powdery graphite. As shown in Figs. 3A and 3B, a considerable number of ceramic grains 2 are charged into a vessel 6 having a circular section, and the vessel 6 is rotated through rotating rollers 7. While the vessel 6 is being rotated, a binder 8 (may be organic, inorganic, or any other appropriate binder material) is attached to the ceramic grains 2 rolling on the inner peripheral surface of the vessel 6 by spraying the binder 8 into the vessel 6 through a sprayer 9. Then, as shown in Fig. 3C, while the vessel 6 is being rotated, graphite powder CP is sprayed onto the ceramic grains 2 rolling inside the vessel 6. Thereby, graphite powder CP is attached to the surfaces of the ceramic grains 2 by the binder 8. The attached amount of the graphite powder onto the surfaces of the ceramic grains can be adjusted by repeating the steps (B) and (C), as appropriate. Consequently, a discrete composite ceramic material composed of pellets CB can be obtained, which are coated with the graphite powder CP in a given thickness.

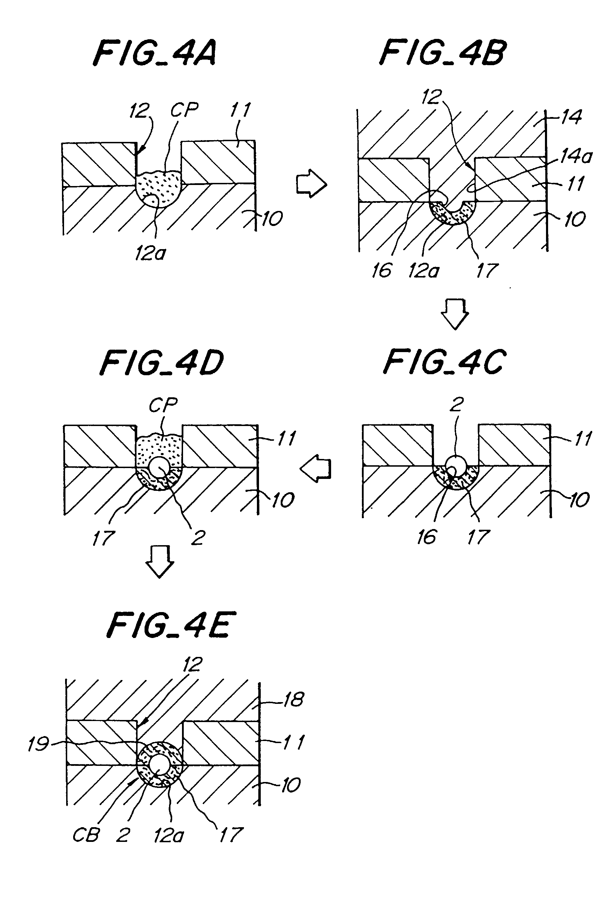

Figs. 4A through 4E depict another production method in which graphite powder is press molded. As shown in Fig. 4A, a lower mold 10 and an intermediate mold 11 are set, and graphite powder CP is charged into a cavity 12 having a semi-spherical depression 12a as a bottom surface. Then, as shown in Fig. 4B, the fed graphite powder CP is press molded by first upper mold 14. In the first upper mold 14 is formed a semi-spherical projection 14a having a radius smaller than that of the semi-spherical depression 12a of the cavity 12. Thus, when the graphite powder is press molded with first upper mold 14, a semi-spherical intermediate molding 17 having a semi-spherical depression 16 in a central portion is obtained.

As shown in Fig. 4C, the first upper mold 14 is removed, and a ceramic grain 2 is placed into the semi-spherical depression 16 of the intermediate molding 17. Further, as shown in Fig. 4D, graphite powder CP is additionally fed onto the ceramic grain 2, and then, as shown in Fig. 4E, the secondly fed graphite powder CP is pressed by means of second upper mold 18, which is differently shaped from first upper mold 14. The second mold 18 is formed with a semi-spherical depression 19 which serves to define a single spherical space with the semi-spherical depression 12a of the cavity 12. When the graphite powder is press molded with the upper mold 18, an upper semi-spherical portion is formed to produce a composite ceramic pellet CB having the ceramic grain 2 buried in a central portion thereof. Thereafter, the upper mold 18 and the intermediate mold 11 are removed, and the composite ceramic pellet CB is taken out from the lower mold 10.

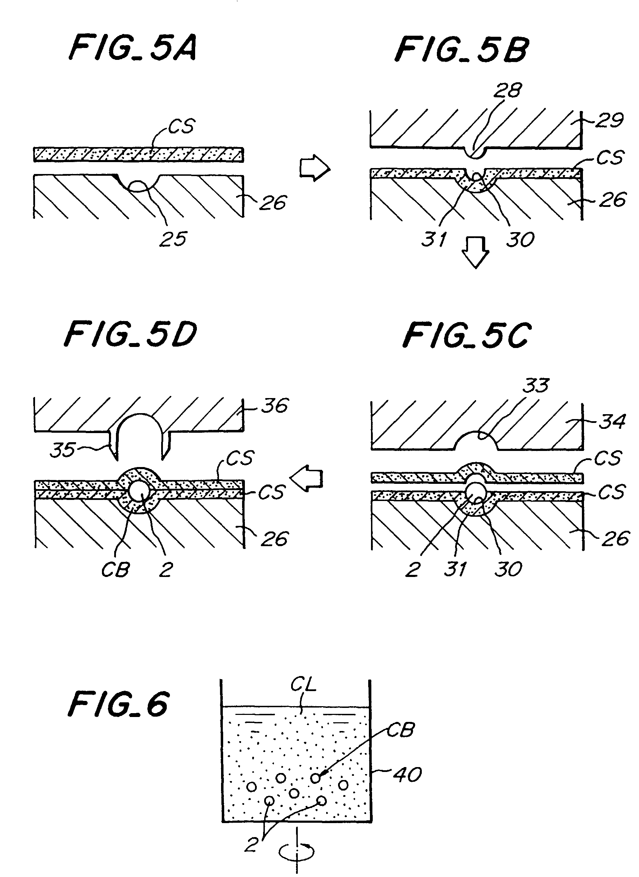

Figs. 5A through 5D depict another production process in which sheet-like members are press molded. As shown in Fig. 5A, a first, flat graphite sheet CS is set on a lower mold 26 having a semi-spherical depression 25. Thereafter, the first graphite sheet CS is press molded by an upper mold 29 having a semi-spherical semi-spherical projection 28, thereby forming a graphite portion 31 on which a semi-spherical depression 30 is formed. Two graphite sheets CS are employed. As shown in Fig. 5C, a spherical ceramic grain 2 is set in the semi-spherical depression 30 of one graphite sheet CS, and a given adhesive is applied onto the graphite sheet CS. Thereafter, a second graphite sheet CS is placed on the first graphite sheet CS, and the laminated graphite sheets are press molded by using an upper mold 34 having a semi-spherical depression 33. Thereby, the ceramic grain 2 is held between the two graphite sheets CS in a sandwiched fashion. Then, as shown in Fig. 5D, a laminated portion having the ceramic grain 2 buried in a central portion is cut under pressure by using another upper mold 36 having a cylindrical cutting portion 35, and taken out as a small, discrete pellet.

Fig. 6 depicts another production method. In this method, ceramic grains 2 are fed into a vessel 40 in which fluid graphite CL is placed (if necessary, an appropriate binder is added), and graphite CL is attached onto surfaces of the ceramic grains 2. The graphite can be uniformly attached to the ceramic grains 2 by vibrating, revolving or rotating the vessel 40 as in a barrel vessel. The ceramic grains 2 onto which graphite CL is attached is taken out from the vessel 40. The coating steps may be repeated in the vessel 40 through a drying step therebetween. Thereby, discrete composite ceramic materials comprising pellet CB coated with graphite CL in a given thickness are obtained.

In the discrete composite ceramic material obtained by any of the above various methods, the ceramic grain 2 positioned in the central portion functions as a dense core having high compressive strength, whereas the graphite layer 3 on the outer peripheral side functions to reduce a coefficient of friction. Such discrete composite ceramic materials may be used for sealing members.

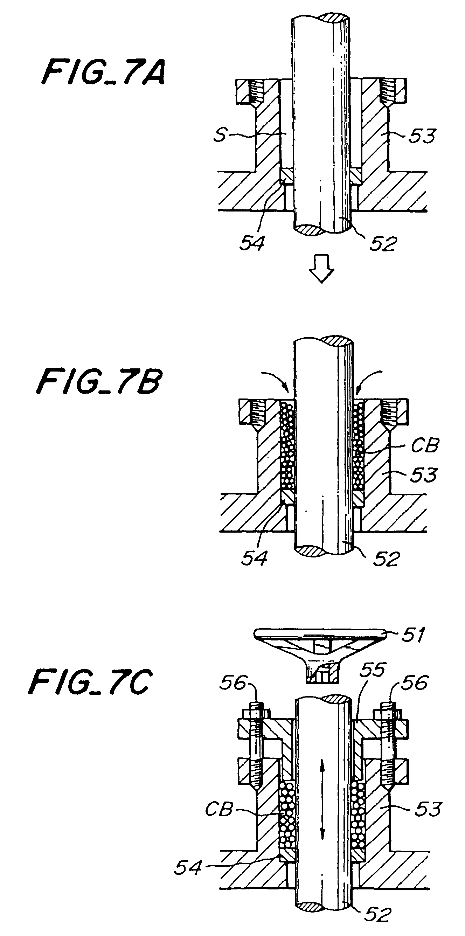

Figs. 7A through 7C depict, by way of example, a sealing member and a sealed portion-forming method according to the present invention, using the thus obtained discrete composite ceramic material. This is an example of application to a sealing portion of a high temperature-high pressure steam valve in a thermal power plant. When handle 51 in Fig. 7C is turned, a valve shaft 52 provided inside a seal casing 53 axially moves to open or close a steam path and control a flow rate thereof. The discrete composite ceramic material comprising pellets CB, as shown in Fig. 2 is used to effect sealing between the cylindrical seal casing 53 on a stationary side and the valve shaft 52 on a movable side.

An end ring 54 is arranged on one end of the seal casing 53, and a short cylindrical flanged pressing member 55 is tightened toward the other end by means of bolts 56. In order to form a sealed portion, as shown in Fig. 7A, the bolts 56 are detached, and the pressing member 55 is removed. Then, as shown in Fig. 7B, a given amount of the discrete composite ceramic material is charged into and fully filled in a cylindrical sealing space S in which the sealed portion is to be formed. In this state, considerable gaps exist among a number of the small pellets CB. Thus, as shown in Fig. 7C, the pressing member 55 is fitted into the cylindrical space between an inner peripheral surface of the seal casing 53 and an outer peripheral surface of the valve shaft 52, and the small pellets CB are tightly adhered to one another by being pressed between an end face of the pressing member 55 and the end ring 54 through tightening the bolts 56. At that time, a tightening plane pressure of the pressing member 55 is set at, for example, 200 to 500 kgf/cm².

Leakage of high pressure and high temperature steam, hot water or the like can be prevented by the formation of the sealing member composed of the small composite ceramic pellets collected under pressure. In this case, the ceramic grain 2 of the pellets (See Fig. 2) functions as a dense core having a compression strength large enough to withstand the above pressurizing, whereas the graphite layer 3 on the outer peripheral side functions to improve sliding performance of the valve shaft 52. That is, the graphite layer 3 of the pellets is pressed against the outer peripheral surface of the valve shaft 52 so that the valve shaft 52 slides relative to the graphite layer. Since the graphite layer 3 has a low frictional resistance, the composite ceramic pellet will not scrape or prohibit movement of the valve shaft 52. Thus, smooth movement of the valve shaft 52 is assured. The discrete composite ceramic materials may be widely applicable to an arbitrary sealing diameter and an arbitrary sealing shape.

In Figs. 7A through 7C, the sealed portion is constituted in the state that the discrete composite ceramic material is kept pressurized. Such a sealed portion is generally exchanged with a fresh one, for example, at a cycle of 2 to 5 years through periodical decomposition inspection. At that time, the bolts 56 are loosened to remove the pressing member 55, the solid mass of the composite ceramic material is exposed and crushed with an acute jig, and the crushed matter can be easily removed from the seal casing 53 by applying suction with an appropriate suction unit (not shown). The ceramic grains of the removed composite material can be used again by fractioning and separating the ceramic grains, resulting in reuse of the resources. This also leads to a decrease in cost of the sealing member. For this reason, the discrete composite ceramic material provides a useful value of recycling. After the removal of the used material, fresh, discrete composite ceramic material is filled in the seal space, which are then pressed by the pressing member 55 as mentioned above.

If the graphite layer 3 is too thin, the surface of the ceramic grain 2 is likely to be exposed through the fracture of the graphite layer 3 during sliding with the valve shaft 52 or the like so that the composite ceramic grain is likely to scrape against the valve shaft 52 when the valve shaft moves. Thus, the thickness of the graphite layer 3 is preferably equal to or greater than one-half the diameter D of the ceramic grain 2 as mentioned above. On the contrary, if the graphite layer 3 is too thick and the size of the ceramic grain 2 is made too small, workability of setting the packing is likely to be deteriorated. Thus, it is preferable that the diameter of the ceramic grain 2 is not less than 0.5 mm, for example 3 mm.

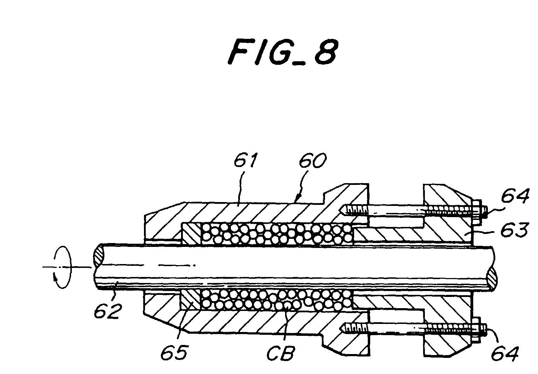

Fig. 8 shows an example of an application of the present invention to a sealed portion of a pump. In this embodiment, a given amount of composite ceramic pellets are filled in a cylindrical sealing space between a seal casing 61 and a rotary shaft 62, and a pressing jig 63 keeps the composite ceramic pellets in a pressed state between the pressing jig 63 and an end ring 65 by tightening bolts 64 into the seal casing 61. In this state, a sealing function is exhibited in the same manner as in the embodiment of Figs. 7A through 7C. In particular, when the rotary shaft 62 is rotated, excellent sliding performance can be obtained with the graphite layer 3 of the composite ceramic grains CB. Thus, smooth rotation of the rotary shaft 62 is guaranteed, free from scraping against the composite ceramic pellets.

In the following, included to illustrate use of the present invention, composite ceramic pellets CB as obtained above were used in packings for various valves in a thermal power plant, and their sealing performance was examined. Test results are shown in Table 1. The terms "main steam line", "extraction steam line", "reheating steam line" and "feed water line" of the thermal power plant in the left column of Table 1 are defined below, and sealed portions were applied to valves in the main steam line and the extraction steam line, respectively.
Main steam line piping line for feeding superheated steam generated in boiler to turbine
Reheating steam line piping line for extracting steam from outlet of high pressure turbine, reheating it in a reheater of a boiler to raise superheated degree, and continuing expansion of steam by returning steam to turbine
Feed water line piping line for feeding water to be changed to steam in boiler
Extraction steam line piping line for extracting steam from turbine to plural locations and heating water fed to boiler by extracted steam

**Table 1**

| | Operating conditions | | Fastening bearing stress (Kgf/cm²) |
|---|---|---|---|
| | Temperature (°C) | Pressure (Kgf/cm²) | |
| Main steam line | 410∼575 | 70∼250 | 500 |
| Reheating steam line | 360∼575 | 30∼50 | 400 |
| Feed water line | 170∼360 | 6∼280 | 500 |
| Extraction steam line | 100∼450 | 1∼130 | 400 |

Packings (Sealing members) used in the tests were as follows:

### (1) Asbestos packing (conventional product)

Packing obtained by shaping a middle core through kneading and molding asbestos fibers together with graphite and plastic, braiding asbestos threads reinforced with a heat-resistive alloy around the middle core in a square shape, and treating the surface of braided matter with graphite.

### (2) Non-asbestos packing (Reference sample)

1) Packing formed by laminating expanded graphite sheets in which thin Inconel metallic wires are arranged and shaping the laminate in a ring-like shape (used in main steam line and feed water line).
2) Packing obtained by braiding expanded graphite thread reinforced with Inconel wire and treating surface of the braided matter with graphite.
(3) Sealing portion using composite ceramic grains CB as shown in Figs. 7C (Present Invention)

Test items and test results are given in Table 2.

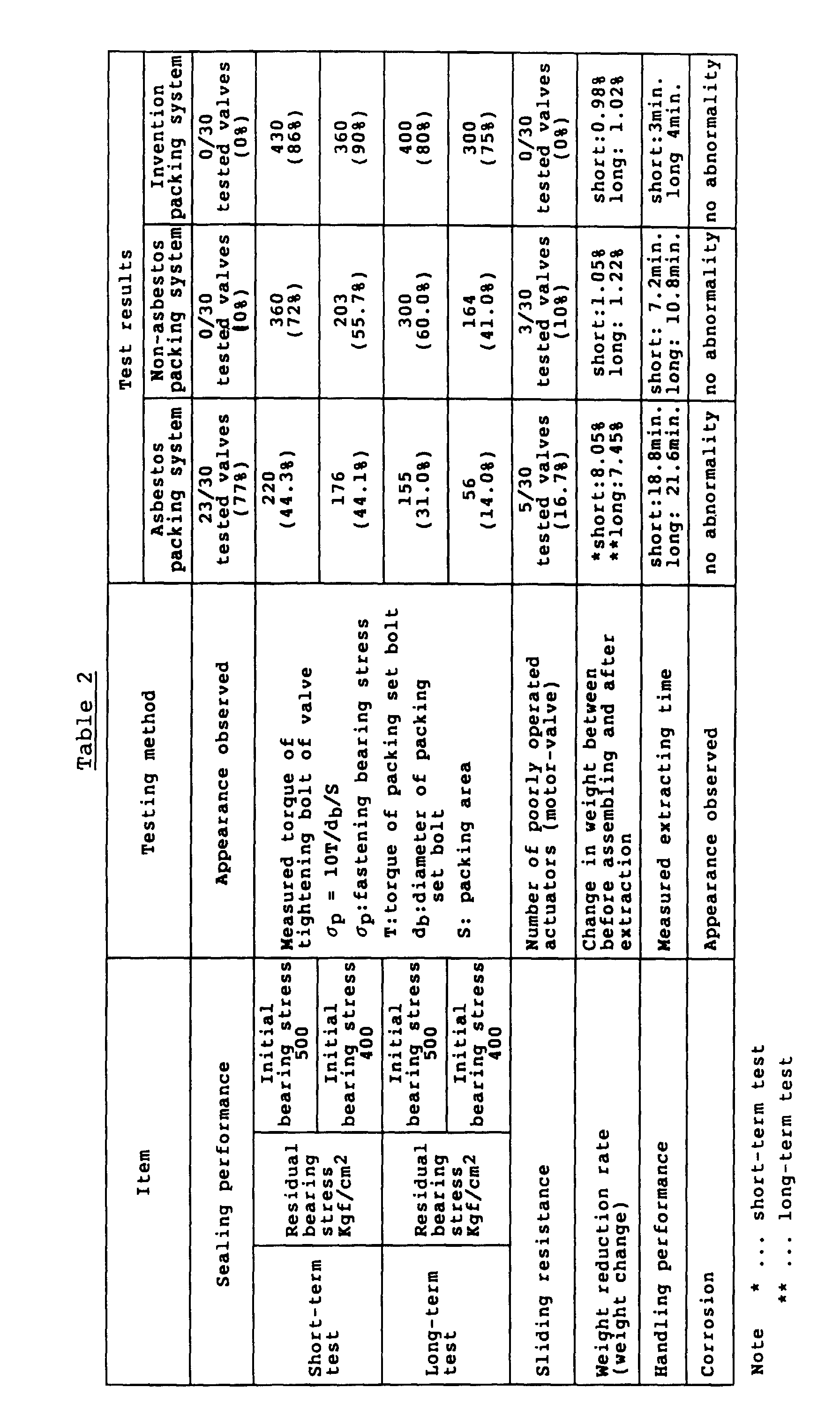

In Table 2, the "Sealing performance" denotes the number of the valves requiring periodic refastening of its pressing member. It is seen that nearly 80% of the valves with the asbestos packings needed to be refastened.

Next, a residual bearing stress was determined by measuring a torque of a packing set bolt according to a calculating equation in Table 2. A short term test was effected for 300 days, and a long-term test was effected for 700 days. From the results, it is seen that the reduction in the bearing stress is highest in the asbestos packing system and high in the non-asbestos packing system, while reduction in the bearing stress of the invention packing system is the lowest.

With respect to the sliding resistance, the number of the valves exhibiting poor operation was examined. Table 2 shows the number of the valves which could not be operated unless the bearing stress of the sealed portion was loosened, because of poor operation. From this, it is clear that the sealed portion of the present invention had smaller sliding resistance and excellent operability.

Further, a weight reducing rate was smallest in the case of the sealing portions of the present invention. In order to further examine the handling performance, the time required for the sealing member to be taken out was measured. The terms "Short" and "Long" are abbreviations of the short-term test and the long-term test, respectively. It took the longest time for the asbestos packing system to be removed. Since the non-asbestos packing system has the number of rings being a half of the asbestos packing system, the extracting time is accordingly reduced. On the other hand, it is seen that the sealing portion according to the present invention could be taken out in a short time period of 3 to 5 minutes, being half the time in the case of the asbestos packing system. With respect to corrosion property, no abnormalities were observed in the packing systems including the invention samples.

Further, various other types of discrete composite materials according to the present invention were prepared, in which ceramic, metal or plastic materials were employed as the core (inner portion). Also, a sample was prepared wherein the entire portion was made of graphite according to the method of the present invention.

Then, each of these types of the discrete composite materials was subjected to the test described in connection with Fig. 8 with respect to the sealing performance, the sliding performance, and the fastening bearing stress. As a result, it was revealed that these types of discrete materials can be used as sealing materials under limited conditions. The results are as follows:
(1) The discrete composite material in which ceramic was employed as the core material exhibited excellent sealing performance, excellent sliding performance, and excellent fastening bearing stress at both room temperature and high temperature (300°C).
(2) The discrete composite materials in which metal was employed as the core material exhibited excellent sealing performance and excellent fastening bearing stress at both room temperature and high temperature (300°C). However, although the sliding performance was excellent at room temperature, it was poor at 300°C.
(3) The discrete composite materials in which plastic was employed as the core material exhibited excellent sealing performance, excellent sliding performance, and excellent fastening bearing stress at room temperature, but sealing performance, sliding performance and fastening stress were poor at 300°C.
(4) The discrete composite materials in which graphite was employed as the core material exhibited excellent sealing performance, excellent sliding performance, and excellent fastening bearing stress at both room temperature and a high temperature (300°C).
(5) The discrete materials which were entirely made of graphite exhibited excellent sealing performance and excellent fastening bearing stress at both room temperature and high temperature, but its sliding performance was diminished at both room temperature and 300°C.

Further, the compression strength of these small discrete composite materials (1), (2), (3) and (4) were as follows:
(1) ........ not less than 20,000 kg/cm²
(2) ........ not less than 4,000 kg/cm²
(3) ........ not less than 500 kg/cm²
(4) ........ 300 to 650 kg/cm²

According to the sealing member and the sealed portion-forming method of the present invention, the sealed portion is simply formed by filling discrete ceramic materials comprising pellets in the space to be sealed and pressing the ceramic materials in this space. The packing repair working can be simple and working time is shortened, and an arbitrary shape and an arbitrary size of the sealed portion may be easily obtained. Therefore, many pre-formed packings need not be prepared or stocked. Since no asbestos is used, the sealing member is used safely. Furthermore, since thermal deterioration is slight in the sealing portion at high temperature, the residual bearing stress can be maintained over a long term period. Further, the shaft is subjected to less corrosion and abrasion.

Additionally, as compared with a seal formed by charging powdery carbon and compressing, the small discrete materials according to the present invention have the merits of: (1) improved workability in the formation of the seal, (2) improved compression factor (i.e., as high as 40% as compared to 10% of powdery carbon), and (3) improved acid resistance by the use of the binder.

## Claims

1. Use of discrete particles to make a sealing member in situ at the location where a sealing effect is to be created between two members, by filling said particles into a space where said sealing member is to be made which space lies between said two members and compressing said particles into a compacted body, characterized in that each particle has at least its surface layer formed of graphite.

2. Use of particles according to claim 1 wherein said particles consist wholly of graphite.

3. Use of particles according to claim 1 wherein each said particle has a core enveloped by the surface layer of graphite.

4. Use of particles according to claim 3 wherein said core has a compression strength of greater than 500 kg/cm².

5. Use of particles according to claim 3 or claim 4 wherein said core is composed of a ceramic material, a metal or a plastics material.

6. Use of particles according to any one of claims 1 to 5 wherein the particle size of said particles is less than 15 mm.

7. Use of particles according to claim 6 wherein said particle size is in the range 1 to 5 mm.

8. Sealing member made in situ at the location where a sealing effect is to be created between two members, said sealing member being formed of a number of discrete particles compressed together into a compacted body, characterized in that each particle has its surface layer formed of graphite and has a core enveloped by the graphite surface layer.

9. Sealing member according to claim 8 wherein said core has a compression strength of at least 500 kg/cm².

10. Sealing member according to claim 8 or claim 9 wherein said core is composed of a ceramic material, a metal or a plastics material.

11. Sealing member according to any one of claims 8 to 10, wherein the particle size of said particles is less than 15 mm.

12. Sealing member according to claim 11, wherein said particle size is in the range 1 to 5 mm.

13. Method of making a sealing member in situ at the location where a sealing effect is to be created between two members, comprising filling discrete particles into a space around a first one of said members around which the sealing member is to be formed, the second one of said members surrounding the space, and compressing the particles in said space to form a compacted body mass thereof, characterized in that before compression the particles each has at least its surface layer formed of graphite.

14. Method according to claim 13 wherein said particles consist wholly of graphite.

15. Method according to claim 13 wherein each said particle has a core enveloped by the surface layer of graphite.

16. Method according to claim 15 wherein said core has a compression strength of greater than 500 kg/cm².

17. Method according to claim 15 or claim 16 wherein said core is composed of a ceramic material, a metal or a plastics material.

18. Method according to any one of claims 13 to 17 wherein the particle size of said particles is less than 15 mm.

19. Method according to claim 18 wherein said particle size is in the range 1 to 5 mm.

20. Material, for use in making a sealing member in situ according to claim 1 or for use in a sealing member according to claim 8, in the form of discrete particles each having a graphite surface layer enveloping a core composed of a ceramic material, a metal or a plastics material.

21. Material according to claim 20 wherein said core has a compression strength of greater than 500 kg/cm².

22. Material according to claim 20 or 21 wherein the particle size of said particles is less than 15 mm.

23. Spherical particles according to claim 22 wherein said particle size is in the range 1 to 5 mm.

24. A method for producing a composite discrete particle material according to claim 20 comprising an inner core portion and an outer layer portion of graphite enveloping said inner portion, said inner core portion being composed of a ceramic, said method being selected from the following processes (1) to (4):
(1) attaching a binder onto the ceramic core portion and attaching a powdery graphite onto said ceramic core portion through the binder, and repeating these steps at need;
(2) producing an intermediate molding by press molding a powdery graphite, said intermediate molding being provided with a depression into which the ceramic core portion is to be placed, fitting said ceramic core portion into the depression of said intermediate molding, placing additional powdery graphite onto said intermediate molding to which said ceramic core portion is fitted, and press molding said additional powdery graphite to envelop the ceramic core portion in the powdery graphite;
(3) interposing the ceramic core portion between first and second sheets made of graphite, pressing said first and second sheets together in a state that an adhesive is applied between them, to form a composite sheet-shaped product in which said ceramic core portion is enveloped between said sheets, and separating the discrete particle material by cutting off a remainder of the laminated sheets; and
(4) placing the ceramic core portion in a container which contains a fluid graphite material, and depositing said graphite material onto the surface of said ceramic core portion.

## Patentansprüche

1. Verwendung diskreter Teilchen zur in situ-Herstellung eines Dichtungselements an der Stelle, wo eine Dichtungswirkung zwischen zwei Elementen zu erzielen ist, durch Einfüllen der Teilchen in einen Zwischenraum, in dem das Dichtungselement herzustellen ist, wobei der Zwischenraum zwischen den beiden Elementen liegt, und Pressen der Teilchen zu einem kompaktierten Körper, dadurch gekennzeichnet, daß zumindest die Oberflächenschicht jedes Teilchens aus Graphit gebildet ist.

2. Verwendung von Teilchen nach Anspruch 1, worin die Teilchen zur Gänze aus Graphit bestehen.

3. Verwendung von Teilchen nach Anspruch 1, worin jedes Teilchen einen von der Graphit-Oberflächenschicht umhüllten Kern besitzt.

4. Verwendung von Teilchen nach Anspruch 3, worin der Kern eine Druckfestigkeit von mehr als 500 kg/cm² aufweist.

5. Verwendung von Teilchen nach Anspruch 3 oder 4, worin der Kern aus Keramikmaterial, Metall oder Kunststoffmaterial besteht.

6. Verwendung von Teilchen nach einem der Ansprüche 1 bis 5, worin die Teilchengröße der Teilchen weniger als 15 mm beträgt.

7. Verwendung von Teilchen nach Anspruch 6, worin die Teilchengröße im Bereich von 1 bis 5 mm liegt.

8. Dichtungselement, das in situ an jener Stelle hergestellt wird, an der eine Dichtungswirkung zwischen zwei Elementen zu erzielen ist, wobei das Dichtungselement aus einer Anzahl diskreter Teilchen besteht, die zu einem kompaktierten Körper gepreßt sind, dadurch gekennzeichnet, daß die Oberflächenschicht jedes Teilchens aus Graphit besteht und jedes Teilchen einen von der Graphit-Oberflächenschicht umhüllten Kern besitzt.

9. Dichtungselement nach Anspruch 8, worin der Kern eine Druckfestigkeit von zumindest 500 kg/cm² besitzt.

10. Dichtungselement nach einem der Ansprüche 8 oder 9, worin der Kern aus Keramikmaterial, Metall oder Kunststoffmaterial besteht.

11. Dichtungselement nach einem der Ansprüche 8 bis 10, worin die Teilchengröße der Teilchen weniger als 15 mm beträgt.

12. Dichtungselement nach Anspruch 11, worin die Teilchengröße im Bereich von 1 bis 5 mm liegt.

13. Verfahren zur in situ-Herstellung eines Dichtungselements an jener Stelle, an der eine Dichtungswirkung zwischen zwei Elementen zu erzielen ist, umfassend das Einfüllen diskreter Teilchen in einen Zwischenraum um ein erstes der Elemente, um das das Dichtungselement zu bilden ist, herum, wobei das zweite der Elemente den Raum umgibt, und Pressen der Teilchen im Zwischenraum, um daraus eine kompaktierte Körpermasse zu bilden, dadurch gekennzeichnet, daß vor dem Pressen der Teilchen zumindest die Oberflächenschicht jedes Teilchens aus Graphit gebildet ist.

14. Verfahren nach Anspruch 13, worin die Teilchen zur Gänze aus Graphit bestehen.

15. Verfahren nach Anspruch 13, worin jedes Teilchen einen Kern besitzt, der von der Oberflächen-Graphitschicht umhüllt ist.

16. Verfahren nach Anspruch 15, worin der Kern eine Druckfestigkeit von mehr als 500 kg/cm² besitzt.

17. Verfahren nach Anspruch 15 oder 16, worin der Kern aus Keramikmaterial, Metall oder Kunststoffmaterial besteht.

18. Verfahren nach einem der Ansprüche 13 bis 17, worin die Teilchengröße der Teilchen weniger als 15 mm beträgt.

19. Verfahren nach Anspruch 18, worin die Teilchengröße im Bereich von 1 bis 5 mm liegt.

20. Material zur Verwendung bei der in situ-Herstellung eines Dichtungselements nach Anspruch 1 oder zur Verwendung in einem Dichtungselement nach Anspruch 8 in Form diskreter Teilchen mit jeweils einer Graphit-Oberflächenschicht, die einen Kern aus Keramikmaterial, Metall oder Kunststoffmaterial umhüllt.

21. Material nach Anspruch 20, worin der Kern eine Druckfestigkeit von mehr als 500 kg/cm² besitzt.

22. Material nach Anspruch 20 oder 21, worin die Teilchengröße der Teilchen weniger als 15 mm beträgt.

23. Kugelförmige Teilchen nach Anspruch 22, worin die Teilchengröße im Bereich von 1 bis 5 mm liegt.

24. Verfahren zur Herstellung eines Verbundmaterials nach Anspruch 20 in Form von diskreten Teilchen, umfassend einen Innenkernabschnitt und einen Außenschichtabschnitt aus Graphit, der den Innenabschnitt umhüllt, wobei der Innenkernabschnitt aus Keramikmaterial besteht, wobei das Verfahren aus den folgenden Verfahren (1) bis (4) ausgewählt ist:
(1) Binden eines Bindemittels an den Keramikkernabschnitt und Binden von pulverförmigem Graphit an den Keramikkernabschnitt über das Bindemittel und gegebenenfalls Wiederholen dieser Schritte;
(2) Herstellen eines Zwischenformteils durch Preßformen von pulverförmigem Graphit, wobei der Zwischenformteil mit einer Vertiefung versehen ist, in der der Keramikkernabschnitt unterzubringen ist, Einpassen des Keramikkerns in die Vertiefung des Zwischenformteils, Aufbringen von zusätzlichem pulverförmigem Graphit auf den Zwischenformteil, an dem der Keramikkernabschnitt angebracht ist, und Preßformen des zusätzlichen pulverförmigen Graphits, um den Keramikkernabschnitt mit dem pulverförmigen Graphit zu umhüllen;
(3) Anordnen des Keramikkernabschnitts zwischen einer ersten und einer zweiten Platte aus Graphit, Zusammenpressen der ersten und zweiten Platte in einem Zustand, in dem ein Kleber dazwischen vorgesehen ist, um ein plattenförmiges Verbundprodukt zu erzeugen, in dem der Keramikkernabschnitt von den Platten umhüllt ist, und Abtrennen des diskreten Teilchenmaterials durch wegschneiden des Rests der laminierten Platten; und
(4) Anordnen des Keramikkernabschnitts in einem Behälter, der fließfähiges Graphitmaterial enthält, und Ablagern des Graphitmaterials auf der Oberfläche des Keramikkernabschnitts.

## Revendications

1. Utilisation de particules distinctes pour produire un organe d'étanchéité in situ à l'emplacement où un effet d'étanchéité doit être créé entre deux organes, en introduisant lesdites particules dans un espace où ledit organe d'étanchéité doit être formé, lequel espace se trouve entre lesdits deux organes et en comprimant lesdites particules en un corps tassé, caractérisée en ce que chaque particule a au moins sa couche de surface formée de graphite.

2. Utilisation de particules selon la revendication 1, où lesdites particules se composent totalement de graphite.

3. Utilisation de particules selon la revendication 1, où chaque particule a un coeur enveloppé par la couche de surface de graphite.

4. Utilisation de particules selon la revendication 3, où ledit coeur a une résistance à la compression de plus de 500 kg/cm².

5. Utilisation de particules selon la revendication 3 ou la revendication 4, où ledit coeur se compose d'une matière céramique, d'un métal ou d'une matière plastique.

6. Utilisation de particules selon l'une quelconque des revendications 1 à 5, où la dimension de particule desdites particules est inférieure à 15 mm.

7. Utilisation de particules selon la revendication 6, où ladite dimension de particule est comprise entre 1 et 5 mm.

8. Organe d'étanchéité produit in situ à l'emplacement où un effet d'étanchéité doit être créé entre deux organes, ledit organe d'étanchéité étant formé d'un certain nombre de particules distinctes comprimées ensemble en un corps tassé, caractérisé en ce que chaque particule a sa couche de surface formée de graphite et a un coeur enveloppé par la couche de surface de graphite.

9. Organe d'étanchéité selon la revendication 8, où ledit coeur a une résistance à la compression d'au moins 500 kg/cm².

10. Organe d'étanchéité selon la revendication 8 ou la revendication 9, où ledit coeur se compose d'une matière céramique, d'un métal ou d'une matière plastique.

11. Organe d'étanchéité selon l'une quelconque des revendications 8 à 10, où la dimension de particule desdites particules est inférieure à 15 mm.

12. Organe d'étanchéité selon la revendication 11, où ladite dimension de particule est de l'ordre de 1 à 5 mm.

13. Méthode de production d'un organe d'étanchéité in situ à l'emplacement où un effet d'étanchéité doit être créé entre deux organes, consistant à introduire des particules distinctes dans un espace autour d'un premier desdits organes autour duquel l'organe d'étanchéité doit être formé, le second desdits organes entourant l'espace, et à comprimer les particules dans ledit espace pour former une masse d'un corps tassé de celles-ci, caractérisée en ce qu'avant compression, chacune des particules a au moins sa couche de surface formée de graphite.

14. Méthode selon la revendication 13, où lesdites particules se composent totalement de graphite.

15. Méthode selon la revendication 13, où chaque particule a un coeur enveloppé par la couche de surface de graphite.

16. Méthode selon la revendication 15, où ledit coeur a une résistance à la compression de plus de 500 kg/cm².

17. Méthode selon la revendication 15 ou la revendication 16, où ledit coeur se compose d'une matière céramique, d'un métal ou d'une matière plastique.

18. Méthode selon l'une quelconque des revendications 13 à 17, où la dimension de particule desdites particules est inférieure à 15 mm.

19. Méthode selon la revendication 18, où ladite dimension de particule est de l'ordre de 1 à 5 mm.

20. Matériau, à utiliser pour produire un organe d'étanchéité in situ selon la revendication 1 ou pour une utilisation dans un organe d'étanchéité selon la revendication 8, sous la forme de particules distinctes, chacune ayant une couche de surface de graphite enveloppant un coeur composé d'une matière céramique, d'un métal ou d'une matière plastique.

21. Matériau selon la revendication 20, où ledit coeur a une résistance à la compression de plus de 500 kg/cm².

22. Matériau selon la revendication 20 ou 21, où la dimension de particule desdites particules est inférieure à 15 mm.

23. Particules sphériques selon la revendication 22, où ladite dimension de particule est de l'ordre de 1 à 5 mm.

24. Méthode de production d'un matériau de particules distinctes composites selon la revendication 20, comprenant une portion de coeur interne et une portion de couche externe de graphite enveloppant ladite portion interne, ladite portion de coeur interne se composant d'une céramique, ladite méthode étant sélectionnée parmi les procédés (1) à (4) qui suivent :
(1) attacher un liant sur la portion de coeur en céramique et attacher un graphite en poudre sur ladite portion de coeur en céramique par le liant, et répéter ces étapes selon la nécessité ;
(2) produire un moulage intermédiaire par moulage sous pression d'un graphite en poudre, ledit moulage intermédiaire étant pourvu d'une dépression dans laquelle doit être placée la portion de coeur en céramique, fixer ladite portion de coeur en céramique dans la dépression dudit moulage intermédiaire, placer du graphite en poudre supplémentaire sur ledit moulage intermédiaire auquel est fixée ladite portion de coeur en céramique, et mouler sous pression ledit graphite en poudre additionnel pour envelopper la portion de coeur en céramique dans le graphite en poudre.
(3) interposer la portion de coeur en céramique entre des première et seconde feuilles faites de graphite, presser lesdites première et seconde feuilles ensemble dans un état tel qu'un adhésif soit appliqué entre elles, pour former un produit en forme de feuille composite dans lequel ladite portion de coeur en céramique est enveloppée entre lesdites feuilles, et séparer le matériau de particules distinctes en découpant du restant des feuilles stratifiées ; et
(4) placer la portion de coeur en céramique dans un conteneur qui contient du graphite fluide, et déposer ledit graphite sur la surface de ladite portion de coeur en céramique.
